# EUROPÄISCHE PATENTSCHRIFT

(11) **EP 0 643 041 B1**
(45) Veröffentlichungstag und Bekanntmachung des Hinweises auf die Patenterteilung: **22.10.1997**
(21) Anmeldenummer: 94113599.8
(22) Anmeldetag: 31.08.1994
(51) Int. Cl.: C07C 263/00

(54) **Verfahren zur Herstellung von Isocyansäure aus Cyanursäure**
Process for the preparation of isocyanic acid from cyanuric acid
Procédé de préparation d'acide isocyanique à partir de l'acide cyanurique

(30) Priorität: 09.09.1993 AT 1818/93
(43) Veröffentlichungstag der Anmeldung: 15.03.1995
(73) Patentinhaber: DSM Chemie Linz GmbH, 4021 Linz (AT)
(72) Erfinder: Lercher, Johannes, Dr., A-1130 Wien (AT); Zhaoqui, Zhan, NL-7523 TV Enschede (NL)
(74) Vertreter: Kunz, Ekkehard, Dr.

(56) Entgegenhaltungen:
- EP-A- 0 416 236
- GB-A- 1 227 269
- CHEMICAL ABSTRACTS, vol. 82, no. 26, 1975, Columbus, Ohio, US; abstract no. 173135u, & JP-A-49 045 078 (MITSUI TOATSU CHEMICALS, INC.) 2. Dezember 1974
- DATABASE WPI Week 9208, Derwent Publications Ltd., London, GB; AN 92-062869 & SU-A-1 650 581 (INORG CATALYST ELEC) 23. Mai 1991

## Beschreibung

Aus Monatshefte für Chemie 101, 866-870 (1970) ist bekannt, daß Cyanursäure beim Erhitzen auf etwa 400 °C erst in den gasförmigen Zustand übergeht, worauf sich ein thermisches Gleichgewicht mit Isocyansäure einstellt.

In WO 92/4968 ist beschrieben, daß gasförmige Cyanursäure bei Temperaturen von etwa 400 bis 520 °C katalytisch in eine Mischung von nicht näher definierten Produkten, die befähigt sind, Stickoxyde in einem Gasstrom zu reduzieren, zersetzt werden kann. Als Katalysatoren werden dabei Zirkonium und/oder Phosphor enthaltende Katalysatoren angegeben.

Er wurde nun unerwarteterweise gefunden, daß bei der katalysierten thermischen Zersetzung von Cyanursäure keine Mischung von Produkten, sondern praktisch ausschließlich Isocyansäure entsteht, wenn als Katalysator ein Aluminiumkatalysator eingesetzt wird.

Gegenstand der Erfindung ist daher ein Verfahren zur Herstellung von Isocyansäure, das dadurch gekennzeichnet ist, daß Cyanursäure bei Temperaturen von 300 bis 600 °C mit einem Aluminiumkatalysator in Kontakt gebracht wird, worauf die gebildete Isocyansäure isoliert oder direkt zur Weiterreaktion verwendet wird.

Die Herstellung von Cyanursäure kann beispielsweise gemäß AT 365.180 aus Roh- oder Abfallmelamin erfolgen.

Unter Aluminiumkatalysator ist ein Katalysator zu verstehen, der eine Aluminiumverbindung wie Aluminiumoxyd, AlOOH, Alumnosilikat, Spinelle als aktiven Bestandteil enthält. Daneben kann der Katalysator noch andere Metalle, wie Silber, Kupfer, Eisen, Kobalt, Nickel, Titan, Mangan, Chrom oder Mischungen davon, bevorzugt in Form ihrer Oxide enthalten. Ganz bevorzugt ist dabei ein Katalysator, der aus Aluminiumoxyd besteht oder der Aluminiumoxyd enthält. Der Katalysator kann dabei in üblicher Form, beispielsweise in Form von Tabletten, Pellets, Partikeln, Kugeln, Ringen, oder als solcher, aufgebracht auf einem inerten Träger wie etwa Silicium, Aluminium, Aluminiumsilikat, keramische Oxide, Tonerde bzw. Tonerdehydrate, Zinkoxid eingesetzt werden. Ferner kann der Träger auch ein monolithischer Träger aus Keramik, Stahl, Glas sein, auf den der aktive Katalysator fixiert ist. Bevorzugt wird der Aluminiumkatalysator als solcher eingesetzt.
Im Falle der Verwendung eines inerten Trägers sollte der Katalysator etwa 0,1 bis 50 Gew.% katalytisch aktives Aluminium enthalten. Solche Katalysatoren sind bekannt und käuflich zu erwerben.

Die optimale Katalysatormenge, die nicht für die Reaktion an sich sondern nur für die Reaktionsgeschwindigkeit maßgeblich ist, hängt im wesentlichen vom Volumenstrom des Reaktionsgases und damit von der Reaktionsanordnung ab. Sie kann für jede Reaktionsanordnung leicht durch Vorversuche mit verschiedenen Mengenverhältnissen ermittelt werden. In Versuchen hat sich gezeigt, daß ein Gewichtsverhältnis von Cyanursäure : Aluminium von etwa 50 : 1, bevorzugt von 20 : 1 bis 5 : 1 bis etwa 1 : 50 gute Ergebnisse hinsichtlich der Reaktionsgeschwindigkeit zeigt. Da der Katalysator über lange Zeiträume hochaktiv bleibt, können aber auch geringere Katalysatormengen eingesetzt werden, wobei unter Umständen eine längere Kontaktzeit in Kauf genommen wird.

Zur Durchführung des erfindungsgemäßen Verfahrens kann feste Cyanursäure mit dem Katalysator gemischt, auf Reaktionstemperatur erhitzt und das entstehende Gas, gegebenenfalls mit Hilfe eines, unter den Reaktionsbedingungen inerten Trügergases abgezogen werden. Da Cyanursäure bei Temperaturen von etwa 300 °C sublimiert, kann die Cyanursäure aber auch durch Erhitzen in den gasförmigen Zustand übergeführt werden und das Gas, gegebenenfalls mit Hilfe eines unter den Reaktionsbedingungen interten Trägergases, bei Reaktionstemperaturen über den Katalysator geleitet werden. Eine weitere Möglichkeit besteht in der Verwendung eines Wirbelschichtreaktors, in dem Katalysatorpartikel vorgelegt und durch Einblasen eines, unter den Reaktionsbedingungen inerten Trägergases, eine Wirbelschicht aufgebaut wird. In diese Wirbelschicht wird Cyanursäure in fester oder in gasförmiger Form eingebracht und das Reaktionsgas, das die Isocyansäure enthält, abgezogen.

Die Reaktionstemperatur beträgt dabei 300 bis 600 °C, bevorzugt 320 bis 450 °C. Als unter den Reaktionsbedingungen inerten Trägergas kommt etwa Helium, Argon, Stickstoff, Luft in Frage.

Beim Kontakt mit dem Aluminiumkatalysator wird die Cyanursäure praktisch vollständig in Isocyansäure übergeführt. Dabei hat sich gezeigt, daß der Katalysator über lange Zeiträume aktiv bleibt.

Zur Isolierung der Isocyansäure kann der Gasstrom, der das Reaktionsgefäß verläßt, beispielsweise durch eine Kühlfalle oder in ein gekühltes Verdünnungsmittel, beispielsweise einen Ether, eingeleitet werden, wobei die Isocyansäure kondensiert, sodaß gebrauchtsfertige Isocyansäure oder Isocyansäurelösungen entstehen. Dem Gasstrom kann aber vorteilhafterweise auch gemäß EP-A-0 416 236 ein gasförmiger Ether oder ein gasförmiges tertiäres Amin zugesetzt werden, oder der Gasstrom wird in ein flüssiges tertiäres Amin oder in einen Ether eingeleitet, wobei sich ein Addukt aus Isocyansäure und Ether oder aus Isocyansäure und tertiärem Amin bildet, sodaß die Isocyansäure stabilisiert wird. Das in der Gasphase gebildete Addukt wird danach in einem inerten flüssigen Verdünnungsmittel, wie in EP 416 236 beschrieben, kondensiert. Das Addukt von Isocyansäure und tertiärem Amin reagiert gemäß EP-A-0 410 169 wie die freie Isocyansäure selbst und kann zu entsprechenden Folgeprodukten auf die gleiche Art und Weise wie die freie Isocyansäure umgesetzt werden.

Die gebildete, gasförmige Isocyansäure kann aber auch direkt mit einem Reaktionspartner umgesetzt werden, beispielsweise gemäß EP-A-0 410 168 mit einem primären oder sekundären Amin, wobei unsymmetrisch substituierte Harnstoffe entstehen.

Das Verfahren kann kontinuierlich oder diskontiniuerlich durchgeführt werden und wird bevorzugt kontinuierlich durchgeführt.

In einer bevorzugten Ausführungsform wird Aluminiumoxyd, in einem Wirbelschichtreaktor vorgelegt. Durch Einblasen von Stickstoff wird eine Wirbelschicht aufgebaut, die auf 350 bis 450 °C erhitzt wird. In diese Wirbelschicht wird kontinuierlich feste oder gasförmige Cyanursäure eingetragen und gleichzeitig Reaktionsgase mit Hilfe von Stickstoff kontinuierlich ausgetragen.

Die gebildete Isocyansäure wird gegebenenfalls nach Vermischen mit einem gasförmigen tertiärem Amin in einen inerten Verdünnungsmittel gemäß EP-A-0 416 236 kondensiert.

Auf die beschriebene Art und Weise wird aus Cyanursäure in guten Ausbeuten Isocyansäure gewonnen. Das Verfahren stellt daher eine Bereicherung der Technik dar.

### Beispiel 1

35 g Aluminiumoxyd wurden in einem Wirbelschichtreaktor eingetragen. Mit Hilfe von Stickstoff wurde eine Wirbelschicht aufgebaut. Bei einer Temperatur von 380 °C wurden während 40 Minuten 58 g Cyanursäure in die Wirbelschicht eingetragen. Die entstehenden Reaktionsgase, die nur Isocyansäure und Stickstoff enthielten (massenspektrometische Messung), wurden anschließend durch zwei, mit flüssigem Stickstoff gekühlte Kühlfallen geleitet. Der ausgefrorene Feststoff wurde in Chlorform aufgenommen und auf Raumtemperatur erwärmt, wobei sich der Feststoff löste. In der ersten Kühlfalle wurde 40 % in der zweiten 30 % der theoretischen Ausbeute an Isocyansäure gefunden.
Zur Gehaltsbestimmung wurde eine bestimmte Menge der isocyansäurehältigen Lösung mit einer bekannten Menge wäßriger Natronlauge bekannter Konzentration versetzt und 15 bis 30 Minuten gerührt. Die nicht verbrauchte Natronlauge wurde mit Salzsäure gegen Phenolphthalein rücktitriert.

### Vergleichsbeispiel

100 g Quarzsand wurden in einem Wirbelschichtreaktor vorgelegt und mit Stickstoff eine Wirbelschicht aufgebaut die auf 380°C erhitzt wurde. In diese Wirbelschicht wurden während 60 Minuten 87 g Cyanursäure eingebracht. Die Reaktionsgase wurden durch 2, mit flüssigem Stickstoff gekühlte Kühlfallen geleitet. Der ausgefrorene Feststoff wurde in Chloroform aufgenommen, wobei er jedoch nicht in Lösung ging.
In der Chloroformlösung konnte keine Isocyansäure nachgewiesen werden. Der Feststoff wurde mit Hilfe eines IR-Spektrums als Cyanursäure identifiziert.

## Patentansprüche

1. Verfahren zur Herstellung von Isocyansäure, dadurch gekennzeichnet, daß Cyanursäure bei Temperaturen von 300 bis 600 °C mit einem Aluminiumkatalysator in Kontakt gebracht wird, worauf die gebildete Isocyansäure isoliert oder direkt zur Weiterreaktion verwendet wird.

2. Verfahren nach Anspruch 1, dadurch gekennzeichnet, daß als Aluminiumkatalysator ein Katalysator, der als aktive Komponente Aluminiumoxyd enthält, eingesetzt wird.

3. Verfahren nach Anspruch 1, dadurch gekennzeichnet, daß als Aluminiumkatalysator Aluminiumoxyd eingesetzt wird.

4. Verfahren nach einem der Ansprüche 1 bis 3, dadurch gekennzeichnet, daß der Aluminiumkatalysator ohne Träger eingesetzt wird.

5. Verfahren nach einem der Ansprüche 1 bis 4, dadurch gekennzeichnet, daß feste Cyanursäure mit dem Aluminiumkatalysator vermischt und auf Temperaturen von 300 bis 600 °C erhitzt wird.

6. Verfahren nach einem der Ansprüche 1 bis 4, dadurch gekennzeichnet, daß gasförmige Cyanursäure mit oder ohne eines, unter den Reaktionsbedingungen inerten Trägergases über den Aluminiumkatalysator geleitet wird.

7. Verfahren nach einem der Ansprüche 1 bis 4, dadurch gekennzeichnet, daß Aluminiumkatalysatorpartikel in einem Wirbelschichtreaktor vorgelegt und durch Einblasen eines, unter den Reaktionsbedingungen inerten Trägergases, eine Wirbelschicht aufgebaut wird, in die feste oder gasförmige Cyanursäure eingebracht wird.

8. Verfahren nach einem der Ansprüche 1 bis 7, dadurch gekennzeichnet, daß die Reaktion bei Temperaturen von 320 bis 450 °C ausgeführt wird.

9. Verfahren nach einem der Ansprüche 1 bis 8, dadurch gekennzeichnet, daß das gebildete Gas, das die Isocyansäure enthält, mit einem gasförmigen tertiären Amin versetzt wird und das gebildete Addukt aus Isocyansäure und tertiärem Amin in einem inerten Verdünnungsmittel kondensiert wird.

10. Verwendung eines Aluminiumkatalysators zur Herstellung von Isocyansäure aus Cyanursäure.

## Claims

1. Process for preparing isocyanic acid, characterized in that cyanuric acid is brought into contact at temperatures of from 300 to 600°C with an aluminium catalyst, after which the isocyanic acid formed is isolated or used directly for further reaction.

2. Process according to Claim 1, characterized in that the aluminium catalyst used is a catalyst containing aluminium oxide as active component.

3. Process according to Claim 1, characterized in that the aluminium catalyst used is aluminium oxide.

4. Process according to any one of Claims 1 to 3, characterized in that the aluminium catalyst is used without a support.

5. Process according to any one of Claims 1 to 4, characterized in that solid cyanuric acid is mixed with the aluminium catalyst and is heated to temperatures of from 300 to 600°C.

6. Process according to any one of Claims 1 to 4, characterized in that gaseous cyanuric acid, with or without a carrier gas which is inert under the reaction conditions, is passed over the aluminium catalyst.

7. Process according to any one of Claims 1 to 4, characterized in that a fluidized-bed reactor is initially charged with aluminium catalyst particles and a fluidized bed is built up by blowing in a carrier gas which is inert under the reaction conditions, into which bed the solid or gaseous cyanuric acid is introduced.

8. Process according to any one of Claims 1 to 7, characterized in that the reaction is carried out at temperatures of from 320 to 450°C.

9. Process according to any one of Claims 1 to 8, characterized in that the gas formed, which contains the isocyanic acid, is admixed with a gaseous tertiary amine and the adduct of isocyanic acid and tertiary amine which is formed is condensed in an inert diluent.

10. Use of an aluminium catalyst for preparing isocyanic acid from cyanuric acid.

## Revendications

1. Procédé de préparation d'acide isocyanique, caractérisé en ce qu'on amène de l'acide cyanurique au contact d'un catalyseur à l'aluminium, à des températures de 300 à 600°C, après quoi on isole l'acide isocyanique formé ou on l'utilise directement pour une réaction supplémentaire.

2. Procédé selon la revendication 1, caractérisé en ce qu'on utilise, comme catalyseur à l'aluminium, un catalyseur qui contient de l'oxyde' d'aluminium comme composant actif.

3. Procédé selon la revendication 1, caractérisé en ce qu'on utilise de l'oxyde d'aluminium comme catalyseur à l'aluminium.

4. Procédé selon l'une des revendications 1 à 3, caractérisé en ce qu'on utilise le catalyseur à l'aluminium sans support.

5. Procédé selon l'une des revendications 1 à 4, caractérisé en ce qu'on mélange de l'acide cyanurique solide avec le catalyseur à l'aluminium et on chauffe le mélange résultant à des températures de 300 à 600°C.

6. Procédé selon l'une des revendications 1 à 4, caractérisé en ce qu'on amène de l'acide cyanurique gazeux sur le catalyseur à l'aluminium avec ou sans gaz porteur inerte dans les conditions de réaction.

7. Procédé selon l'une des revendications 1 à 4, caractérisé en ce qu'on introduit des particules de catalyseur à l'aluminium dans un réacteur à lit fluidisé, on forme un lit fluidisé en insufflant un gaz porteur inerte dans les conditions de réaction, et on introduit de l'acide cyanurique solide ou gazeux dans ledit lit fluidisé.

8. Procédé selon l'une des revendications 1 à 7, caractérisé en ce qu'on effectue la réaction à des températures de 320 à 450°C.

9. Procédé selon l'une des revendications 1 à 8, caractérisé en ce qu'on mélange le gaz formé, qui contient l'acide isocyanique, avec une amine tertiaire à l'état gazeux et on condense le produit d'addition formé d'acide isocyanique et d'amine tertiaire dans un diluant inerte.

10. Utilisation d'un catalyseur à l'aluminium pour la préparation d'acide isocyanique à partir de l'acide cyanurique.
